# EUROPÄISCHE PATENTANMELDUNG

(11) **EP 0 755 823 A2**
(43) Veröffentlichungstag der Anmeldung: **29.01.1997**
(21) Anmeldenummer: 96111061.6
(22) Anmeldetag: 10.07.1996
(51) Int. Cl.: B60N 2/02

(54) **Sicherheitsvorrichtung für einen in seiner Längsstellung und/oder Lehnenneigung motorisch veränderbaren Fahrzeugsitz**

(30) Priorität: 26.07.1995 DE 19527354
(71) Anmelder: Bayerische Motoren Werke Aktiengesellschaft, 80788 München (DE); I.E.E. International Electronics & Engineering S.à.r.l., L-2632 Luxembourg (LU)
(72) Erfinder: Mahalek, Josef, 85551 Kirchheim (DE); Witte, Michel, 8077 Bertrange (LU); Deges, Hans-Jörg, 54669 Bollendorf (DE)
(74) Vertreter: Bullwein, Fritz

(57) **Zusammenfassung**

Bei einer Sicherheitsvorrichtung für einen in seiner Längsstellung und/oder Lehnenneigung motorisch veränderbaren Fahrzeugsitz, ist der Sitz auf seiner Lehnenrückseite mit einem Sensor versehen, der den Antriebsmotor bei Annäherung der Lehne an ein Hindernis unterbricht und/oder in seiner Wirkrichtung reversiert.

## Beschreibung

Die Erfindung bezieht sich auf eine Sicherheitsvorrichtung mit den Merkmalen des Oberbegriffs von Patentanspruch 1.

Eine derartige Vorrichtung ist bei Fahrzeugen der Firma Audi seit etwa 1986 im Einsatz. Dabei ist es möglich, einen Fahrzeugsitz, der seine Längsstellung und/oder Lehnenneigung selbsttätig in eine vorgegebene Position verändert, durch nochmalige Betätigung der Memory-Taste stillzusetzen. Mit Hilfe der Memory-Taste wird die Bewegung ausgelöst.

Bei der bekannten Vorrichtung ist es erforderlich, eine Einklemmgefahr zu erkennen und die Memory-Taste zu betätigen. Gerade aber das 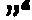 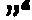 Zurückfahren" des Fahrzeugsitzes bzw. der Lehne geschieht ohne optische Kontrolle durch den die Bewegung auslösenden Fahrzeugbenutzer. Aber selbst wenn er eine Einklemmgefahr erkennt, so ist es nicht ohne weiteres möglich, sofort zu reagieren und die Memory-Taste zu betätigen. Es kommt dann trotz des Erkennens der Gefahr zum Einklemmen.

Der Erfindung liegt die Aufgabe zugrunde, eine Sicherheitsvorrichtung der eingangs genannten Art zu schaffen, bei der mit Sicherheit eine Einklemmgefahr vermieden wird.

Die Erfindung löst diese Aufgabe durch die kennzeichnenden Merkmale des Patentanspruchs 1.

Durch die Anordnung eines Sensors wird eine Einklemmgefahr selbsttätig erkannt und der oder die Antriebsmotoren für den Fahrzeugsitz bzw. die Lehne unterbrochen, möglicherweise sogar in ihrer Wirkrichtung umgekehrt. Der Sensor selbst kann auf verschiedene Weise gestaltet sein. Es kann sich dabei um einen Näherungssensor handeln, der auf Annähetung eines Gegenstands an die Lehne anspricht. Im Gegensatz dazu bietet ein Sensor in Form einer Sensormatte, die die Existenz eines lokalen Druckes erkennt, den Vorteil nur dann tatsächlich die Schutzmaßnahme auszulösen, wenn eine Einklemmgefahr unmittelbar bevorsteht. Einstelltoleranzen und ein möglicherweise zu frühes Ansprechen treten nicht mehr auf.

Die Wirkungsweise der Sensormatte kann unterschiedlich sein. Es kann als Wirkprinzip die Veränderung eines induktiven oder kapazitiven Wertes anwendbar sein. Demgegenüber ist die Veränderung, vorzugsweise Reduzierung des elektrischen Widerstands bei Auftreten eines lokalen Druckes mit geringem fertigungstechnischen Aufwand bei langandauernder Wirksamkeit von Vorteil.

Der Herstellungsaufwand wird weiter dadurch verringert, daß bei einem Sitz, dessen Rückwand in mindestens einer Lagerstelle gehalten ist, der Sensor ebenfalls in dieser Lagerstelle angeordnet ist. Das Wirkprinzip des Sensors kann wie genannt kapazitiv sein oder in der Erhöhung bzw. Erniedrigung eines elektrischen Widerstands bestehen.

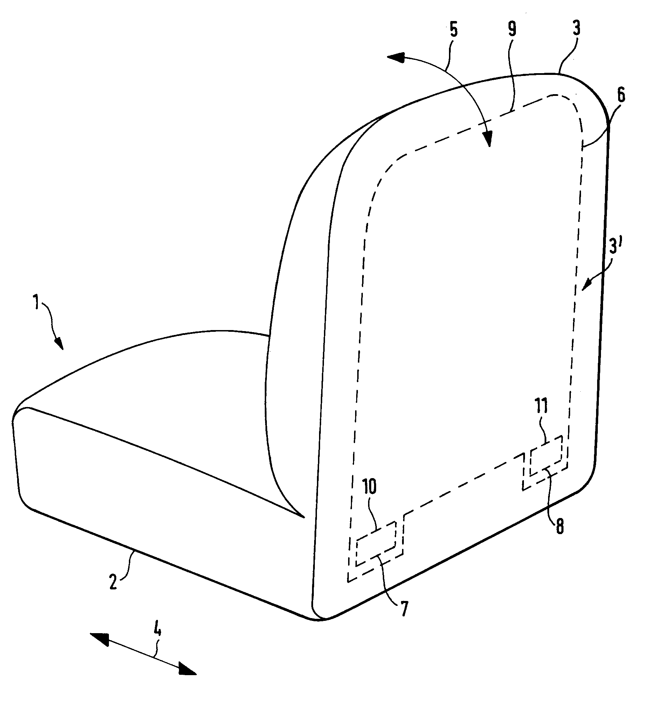

In der Zeichnung ist ein Ausführungsbeispiel der Erfindung dargestellt. Es zeigt die einzige Figur schematisch einen Fahrzeug-Vordersitz 1 perspektivisch schräg von hinten. Der Sitz 1 besitzt ein Unterteil 2 und eine Lehne 3. Das Unterteil ist gegenüber einem nicht dargestellten Sitzgestell durch einen ebenfalls nicht gezeigten Elektromotor in Längsrichtung, durch einen Pfeil 4 symbolisiert, verfahrbar. Die Lehne 3 ist durch einen Elektromotor (nicht dargestellt) in ihrer Neigung dann gedeutet durch einen gebogenen Pfeil 5 einstellbar. Die Rückwand 3' der Lehne 3 enthält einen strichliiert eingezeichneten Verstärkungskörper 6, der in Detektionsstellen 7 und 8 geringfügig beweglich gehalten ist. Ein nach Art eines Schwenklagers ausgebildetes Gegenlager an der Oberseite 9 des Verstärkungskörpers 6 hält diesen in seiner Stellung.

Beim Zurückfahren des Sitzes 1 durch Bewegung des Unterteils 2 und/oder der Lehne 3 nach hinten besteht die Gefahr für einen hinter dem Sitz sich befindlichen Gegenstand, eingeklemmt zu werden. Beim Gegenstand kann es sich sowohl um einen Fahrzeuginsassen als auch um einen zwischen dem Vordersitz und dem Rücksitz angeordneten Gegenstand handeln. Wird die Lehne 3 auf ihrer Rückseite berührt, so ergibt sich lokal ein Druck auf den Verstärkungskörper 6, der nach Art einer Hebelwirkung in die Detektionsstellen 7 und/oder 8 übertragen wird. Ein dort angeordneter druckempfindlicher Sensor 10 bzw. 11 nimmt diesen Druck auf und gibt ein Signal an ein nicht dargestelltes Steuergerät für den oder die Antriebsmotoren des Unterteils 2 bzw. der Lehne 3. Deren Betrieb wird augenblicklich unterbrochen. Die Antriebsmotore können, möglicherweise der Stärke des aufgenommen Drucksignals abhängig sogar in ihrer Wirkrichtung umgedreht werden. Der Sitz 1 wird dann in eine Lage nach vorne gebracht, in der eine Einklemmgefahr beseitigt ist.

Die Wirkung der dargestellten Sicherheitsvorrichtung kann in Verbindung mit einer Sitz-Memory-Einrichtung, wie eingangs genannt, eingesetzt werden. Sie kann auch in Verbindung mit einer weiteren Sicherheitsvorrichtung Verwendung finden, bei der der Vordersitz im Zuge einer Precrashmaßnahme nach hinten bewegt wird, wenn ein Zusammenstoß mit einem entgegenkommenden Fahrzeug bevorsteht und möglicherweise unvermeidlich ist. In beiden Fällen wird die Komfort- bzw. Sicherheitsmaßnahme für den Sitzenden nur soweit durchgeführt, wie dies ohne Komfort- und Sicherheitsbeeinträchtigungen für einen dahinter sitzenden Fahrzeugbenutzer vertretbar ist.

## Patentansprüche

1. Sicherheitsvorrichtung für einen in seiner Längsstellung und/oder Lehnenneigung motorisch veränderbaren Fahrzeugsitz, dadurch gekennzeichnet, daß der Sitz (1) auf seiner Lehnenrückseite (3') mit einem Sensor (10, 11) versehen ist, der den Antriebsmotor bei Annäherung der Lehne (3) an ein Hindernis unterbricht und/oder in seiner Wirkrichtung reversiert.

2. Vorrichtung nach Anspruch 1, dadurch gekennzeichnet, daß der Sensor eine Sensormatte (10, 11) ist, die auf der Lehnenrückseite (3') eingebaut ist und die Existenz einer lokalen Druckstelle erkennt.

3. Vorrichtung nach Anspruch 2, dadurch gekennzeichnet, daß die Sensormatte einen bei Druckeinwirkung änderbaren elektrischen Widerstand besitzt.

4. Sicherheitsvorrichtung nach einem der Ansprüche 1 bis 3, dadurch gekennzeichnet, daß bei einem Sitz (1), dessen Rückwand (3') in einer Lagerstelle (7, 8) gehalten ist, der Sensor als Drucksensor ausgebildet und in der Lagerstelle gehalten ist.
